# EUROPÄISCHE PATENTSCHRIFT

(11) **EP 2 093 054 B1**
(45) Veröffentlichungstag und Bekanntmachung des Hinweises auf die Patenterteilung: **29.05.2013**
(21) Anmeldenummer: 08003020.8
(22) Anmeldetag: 19.02.2008
(51) Int. Cl.: B32B 38/18, B32B 37/22, B32B 37/12

(54) **Anlage und Verfahren zum versatzfreien Kaschieren von massiven und Hohlkammer-Trägerstücken mit Mehrkomponenten-Klebstoffsystemen**
Equipment and method for displacement-free lamination of massive and twin-wall support components with multi-component adhesive systems
Installation et procédé pour le revêtement sans désalignement de pièces de support à chambre creuse et de pièces de support massives à l'aide de systèmes de colle à plusieurs composants

(43) Veröffentlichungstag der Anmeldung: 26.08.2009
(73) Patentinhaber: Friz Kaschiertechnik GmbH, 74189 Weinsberg (DE)
(72) Erfinder: Specht, Stefan, 74246 Eberstadt (DE)
(74) Vertreter: HOFFMANN EITLE

(56) Entgegenhaltungen:
- DE-B3- 10 358 547
- GB-A- 1 159 114
- US-A1- 2007 039 678

## Beschreibung

Die Erfindung betrifft eine Anlage und ein Verfahren zum versatzfreien Kaschieren von massiven und Hohlkammer-Trägerstücken mit Mehrkomponenten-Klebstoffsystemen. Derartige Anlagen bzw. Verfahren werden beispielsweise in der Möbelindustrie verwendet, um die Oberflächen von Möbelstücken zu modifizieren.

Bekannt sind Kaschieranlagen, bei denen ein zu kaschierendes Trägerstück zunächst durch eine Flächenreinigungsvorrichtung mit Kantenreinigungsbürsten geführt wird. Die Kantenreinigungsbürsten dienen zum Reinigen der Trägerstücklängskanten von Span- und Staubpartikeln, und sind vertikal im Einlaufbereich der Flächenreinigungsvorrichtung angeordnet. Die Flächenreinigung der Trägerstückoberseite und -unterseite von Span- und Staubpartikeln erfolgt durch zwei Bürstenwalzen mit Fibrebesatz, die z.B. aus Rosshaar oder Mexiko-Fibre hergestellt sind. Die bei der Reinigung anfallenden Span- und Staubpartikel werden mittels bauseitiger Absauganlagen entsorgt. Nachfolgend durchläuft das Trägerstück eine Vorpressvorrichtung, die einen Kalander mit Stahlwalzen umfasst. Die Vorpressvorrichtung dient dem Glätten der Trägerstückoberseite und -unterseite, zum Ausgleich unterschiedlicher Temperaturniveaus innerhalb eines Trägerstücks durch Kontakt-Wärmeübertragung sowie der Qualitätsverbesserung des Ausgangsträgerstücks durch Verdichten und Glätten der Trägerstückoberfläche. Der Temperaturausgleich innerhalb des Trägerstücks ist für ein nachfolgendes effektives Auftragen eines Härters erforderlich, da er ein schnelleres Einziehen des Härters in das Trägerstück verhindert und gleichzeitig die Feuchtigkeit des Trägerstücks reduziert. Ferner verbessert das Glätten die Kaschierqualität, da die Trägerstückoberfläche unter hohem Druck verdichtet wird und somit auch das Quellverhalten einzelner Späne des Trägerstücks nach einem Leimauftrag auf ein Minimum reduziert wird.

In Durchlaufrichtung auf die Vorpressvorrichtung folgend, durchläuft das Trägerstück eine Härter-Auftragsvorrichtung. In der Härter-Auftragsvorrichtung erfolgt das Auftragen des Härters über Walzen ein- oder beidseitig auf die Trägerstücke. Nachfolgend werden die Trägerstücke durch eine Abdunstzone transportiert, in der jeweils oberhalb und unterhalb des Trägerstücks eine Abdunstvorrichtung zum Abtrocknen des Härters angeordnet ist. Die Abdunstvorrichtung umfasst mehrere Infrarot-Strahler, die Wärme auf das Trägerstück aufbringen und so ein Abtrocknen des Härters bewirken. Anschließend werden die Trägerstücke zu einer Leim-Auftragsvorrichtung transportiert, in der das Auftragen des Leimes über (Dosier-)Walzen ein- oder beidseitig auf die Trägerstücke erfolgt. Der Leim wird hierbei mit Druck auf den zuvor aufgetragenen Härter aufgerollt. Bei der Auftragung des Leimes werden die Walzen mit leistungsarmen Kühlgeräten von ca. 3 bis 6 kW gekühlt. Die Temperatur im Spalt zwischen den Walzen wird mittels der Kühlgeräte auf ca. 18 bis 20°C gekühlt und bei dieser Temperatur konstant gehalten. Dieses Kühlen der Walzen verhindert die Wärmeübertragung von den Trägerstücken aus der Abdunstzone in die Leim-Auftragsvorrichtung, so dass zwischen der Oberfläche des Trägerstücks und dem aufzutragenden Leim nur ein geringer Temperaturunterschied besteht, um eine Schockreaktion zwischen Trägerstück und Leim zu vermeiden.

Nach dem Auftrag des Leimes werden die Trägerstücke zu einer Kaschiervorrichtung transportiert. Hierbei durchlaufen die Trägerstücke eine Reaktionszone, in welcher der Leim mit dem Härter reagiert, d.h. die so genannte Gelierphase des Zweikomponenten-Klebstoffsystems stattfindet. Bei der Gelierphase wird die Klebewirkung des Zweikomponenten-Klebstoffsystems aus Härter und Leim ausgebildet. Die im Anschluss an die Reaktionszone angeordnete Kaschiervorrichtung umfasst einen Kalander mit Stahlwalzen. In der Kaschiervorrichtung wird die zulaufende Beschichtungslage unter Druck und Temperatur auf die Trägerstücke kaschiert.

Schließlich wird das kaschierte Trägerstück einer Nachpressvorrichtung zugeführt, die einen Kalander mit Stahlwalzen umfasst. In der Nachpressvorrichtung wird die kaschierte Oberfläche des Trägerstücks geglättet und die Klebstoff- bzw. Leimfuge, zwischen der Oberfläche des Trägerstücks und der Beschichtungslage, härtet aus. Die ausgehärtete Leimfuge des Zweikomponenten-Klebstoffsystems ist glashart, so dass eine nachträgliche weitere Komprimierung bzw. Glättung der Oberfläche des Trägerstücks nicht möglich ist. Das fertig kaschierte Trägerstück verlässt nun die Kaschieranlage, um außerhalb der Anlage weiter bearbeitet zu werden.

Die bekannte Kaschieranlage weist jedoch verschiedene Nachteile auf. So wurde bisher in der Kaschiertechnik, insbesondere bei der Kaschierung mit Zweikomponenten-Klebstoffsystemen wie beispielsweise Zweikomponenten-Klebstoffsysteme auf Phenolharzbasis, aus verfahrenstechnischen Gründen mit kurzen Strecken zwischen der Leim-Auftragsvorrichtung und der Kaschiervorrichtung gearbeitet. Hierbei betrug die Länge der Strecke von der Leim-Auftragsvorrichtung zur Kaschiervorrichtung, d.h. die Länge der Reaktionszone, im Allgemeinen maximal ca. 3.0 m. Die Länge der Strecke ist bedingt durch das verwendete Zweikomponenten-Klebstoffsystem. Bei einem Zweikomponenten-Klebstoffsystem auf Phenolharzbasis (Klebstoffsystem auf Harnstoffbasis) ist das zentrale Molekül das Formaldehyd, welches mit weiteren Molekülen, wie beispielsweise Phenol, Harnstoff und Melamin, unter Abspaltung (Polykondensation) von Wassermolekülen in einem zeitlichen Zyklus zu einer Klebeschicht bzw. Leimfuge reagiert. Unter hohem Druck und gleichzeitiger Wärmezufuhr reagiert die Leimfuge, während des Kaschierens und Nachpressens, in einen festen, glasharten Aggregatzustand aus. Die Temperatur der Stahlwalzen des Kaschier- bzw. Nachpresskalanders beträgt hierbei jeweils ca. 180°C. Die Länge der Strecke zwischen der Leim-Auftragsvorrichtung und der Kaschiervorrichtung ist somit abhängig von Gelierphase des Zweikomponenten-Klebstoffsystems und der Reaktionszeit, die das Klebstoffsystem zum Aushärten benötigt. Folglich darf die Reaktionszone weder zu kurz sein, da das Zweikomponenten-Klebstoffsystem etwas Zeit zum Gelieren benötigt, noch darf die Reaktionszone zu lang sein, da ansonsten die Leimfuge zu schnell aushärtet, so dass die Oberfläche des kaschierten Trägerstücks nicht mehr im Nachpressschritt geglättet werden kann. Aus diesen Gründen wurde bisher in der Kaschiertechnik mit Reaktionszonen von einer maximalen Länge von ca. 3,0 m gearbeitet. Trägerstücke mit einer Länge von über 3,0 m konnten zudem bisher nicht verarbeitet werden, da Trägerstücke mit einer größeren Länge die Reaktionszone nicht frei durchlaufen konnten, d.h. sie waren beim Durchlaufen der Reaktionszone noch in der Leim-Auftragsvorrichtung und/oder schon in der Kaschiervorrichtung eingespannt.

Weiterhin wurde in der Kaschiertechnik bei Zweikomponenten-Klebstoffsystemen, insbesondere auf Phenolharzbasis, bisher ausschließlich mit Kalandern mit Stahlwalzen kaschiert und nachgepresst. Gründe hierfür sind, wie oben ausgeführt, die für die Kaschierung mit Zweikomponenten-Klebstoffsystemen auf Phenolharzbasis erforderliche Wärme und hohen Drücke. Eine qualitativ hochwertige Kaschierung von Hohlkammer-Trägerstücken, wie Türen und Wabenplatten, war somit nicht möglich, da diese bedingt durch ihre Eigenkonstruktion auf Druck nur begrenzt belastbar sind. Ein zu hoher Druck auf die Hohlkammer-Trägerstücke bei der Kaschierung und dem Nachpressen würde die Trägerstücke beschädigen. Folglich können Unebenheiten in der Oberfläche der Trägerstücke beim Kaschieren und Nachpressen durch Kalander mit Stahlwalzen nicht ausgeglichen werden, ohne die Gefahr einer Beschädigung der Trägerstücke durch zu hohen Druck.

Mit den bekannten Kaschieranlagen ist ferner das Kaschieren von Kunststoff-Beschichtungslagen mit Zweikomponenten-Klebstoffsystemen, insbesondere auf Phenolharzbasis, nicht möglich. Insbesondere kann mit den bekannten Kaschieranlagen eine Aushärtung der Leimfuge, und somit eine Anfangshaftung einer Kunststoff-Beschichtungslage auf dem Trägerstück für die anschließende Weiterverarbeitung, nicht erreicht werden. Die Gründe hierfür sind wie folgt. Wie oben bereits erwähnt, beträgt die Temperatur der Stahlwalzen des Kaschier- bzw. Nachpresskalanders jeweils ca. 180°C. Durch die sehr hohe Berührungstemperatur der Stahlwalzen der Kalander der Kaschiervorrichtung und der Nachpressvorrichtung wird in der Leimfuge die Polykondensation aktiviert. Hierbei werden sämtliche Wassermoleküle abgespalten und die Leimfuge erstarrt in ihren endgültigen, glasharten Aggregatzustand. Bei Dekoren in Form von Papier nimmt das Dekor sowie das Trägerstück (Holzwerkstoff) das abgespaltene Wasser auf. Bei Dekoren aus einem Kunststoffmaterial ist dies jedoch nicht möglich, da die hohe Temperatur der Walzen das Kunststoff-Dekor zum Schmelzen bringt. Ein Absenken der Temperatur unter den Schmelzbereich des Kunststoff-Dekors hätte zur Folge, dass sich nicht alle Wassermoleküle in der Leimfuge abspalten und es zur Dampfblasenbildung (Kürschner) kommt.

Ferner offenbart die US 2007/39678 A1 eine Anlage nach dem Oberbegriff von Anspruch 1.

Eine Aufgabe der Erfindung besteht somit darin, eine Anlage und ein Verfahren zum Kaschieren von massiven und Hohlkammer-Trägerstücken mit Mehrkomponenten-Klebstoffsystemen bereitzustellen, wobei die Fertigung von Trägerstücken optimiert ist.

Diese Aufgabe wird erfindungsgemäß durch eine Anlage zum Kaschieren von massiven und Hohlkammer-Trägerstücken mit Mehrkomponenten-Klebstoffsystemen nach Anspruch 1 gelöst. Die erfindungsgemäße Anlage ist somit zunächst gekennzeichnet durch eine in der Reaktionszone angeordnete Ausrichtvorrichtung zum versatzfreien Ausrichten des Trägerstücks mit einem vorlaufenden Trägerstück. Das Ausrichten der durchlaufenden Trägerstücke erfolgt vorzugsweise mit parallel zur Durchlaufrichtung der Trägerstücke angeordneten Bandförderern, die mit Flachzahnriemen den Kontakt zu den Trägerstücken herstellen.

Durch das Ausrichten in der Reaktionszone werden die Trägerstücke der Kaschiervorrichtung, sowie den nachfolgenden Vorrichtungen, versatzfrei zugeführt. Die Kaschierung der Trägerstücke erfolgt derart, dass die Beschichtungslage etwas über die seitlichen Kanten der jeweiligen Trägerstücke vorsteht. Da die Trägerstücke in der Reaktionszone versatzfrei ausgerichtet und danach direkt der Kaschiervorrichtung zugeführt werden, wird die Beschichtungslage auf jedes Trägerstück mit dem gleichen seitlichen Überstand kaschiert. Nachdem das Trägerstück fertig kaschiert ist, kann es somit direkt einer Vorrichtung zugeführt werden, die den seitlichen Überstand entfernt, ohne für jedes Trägerstück jeweils neu justiert werden zu müssen. Hierbei ist Wesentlich, dass die aufeinander folgenden Trägerstücke keinen Versatz zueinander aufweisen, da ansonsten ein relativ zu den anderen Trägerstücken versetztes Trägerstück beim Entfernen des Überstands beschädigt würde. Das versatzfreie Ausrichten der Trägerstücke in der Reaktionszone optimiert somit die Fertigung von

Trägerstücken, da die Kaschierung bei jedem Trägerstück mit dem gleichen Überstand erfolgt und eine nachfolgende Entfernung des Überstands vereinfacht wird.

Im Sinne der vorliegenden Erfindung umfasst der Begriff "Kaschieren" das Verbinden eines Trägermaterials mit einem Beschichtungsmaterial mittels eines geeigneten Kaschiermittels (Mehrkomponenten-Klebstoffsystem). Das Kaschieren dient dazu, um auf ein Material (Trägerstück) eine schützende und/oder dekorative Schicht aufzubringen und/oder eine Addierung günstiger Materialeigenschaften zu erzielen, wie beispielsweise Erhöhen der Abriebfestigkeit eines Trägerstücks, der Kratzfestigkeit, der UV-Beständigkeit usw. Unter "versatzfreiem Ausrichten" wird ein derartiges Ausrichten verstanden, dass die aufeinander folgenden Trägerstücke im Wesentlichen nicht seitlich voneinander versetzt sind. Hierbei beträgt der maximale seitliche Versatz bei Kunststoffmaterialien vorzugsweise 0mm, während der maximale seitliche Versatz bei Naturmaterialien vorzugsweise weniger als 0,3mm beträgt. Im Allgemeinen sind Werte zwischen 2/10 und 3/10mm als durchschnittlicher maximaler Versatz tolerierbar. Der Begriff "Trägerstück" umfasst Trägermaterialien unterschiedlichster Beschaffenheit, wie beispielsweise Hartfaserplatten, Spanplatten, Melaminspanplatten, Kunststoffplatten, MDF-Platten, HDF-Platten, Wabenplatten, Holzverbundplatten oder Türen. Die Trägerstücke können neben einer ebenen auch eine unebene, geschüsselte, konvexe oder konkav geformte Oberfläche aufweisen, oder als Hohlkammer-Trägerstücke im Innern durch derartige Elemente gestützt werden, wie beispielsweise im Fall von Türen oder Wabenplatten.

Bei der Erfindung weist die Reaktionszone eine größere Länge als die Gesamtlänge des zu kaschierenden Trägerstücks auf, und die Länge der Reaktionszone (6) ist derart ausgestaltet, dass das Trägerstück in ihr versatzfrei ausrichtbar ist. Vorzugsweise ist die Länge der Reaktionszone derart ausgestaltet, dass das Trägerstück bei der Ausrichtung in seiner gesamten Länge die Leim-Auftragsvorrichtung bereits verlassen hat, und wobei es mit seiner vorlaufenden Kante die Kaschiervorrichtung noch nicht erreicht hat. Die Länge der Reaktionszone ist erfindungsgemäß derart ausgestaltet, dass in der Reaktionszone Trägerstücke versatzfrei ausrichtbar sind, deren Gesamtlänge mehr als 6,5m beträgt. Vorzugsweise beträgt die Länge der Reaktionszone 7,5m bei Trägerstücken bis zu 6,5m Länge. Dies ermöglicht eine versatzfreie Ausrichtung auch von langen Trägerstücken, da sich diese weder mit ihrer nachlaufenden Kante in der Leim-Auftragsvorrichtung befinden noch sich mit ihrer vorlaufenden Kante in der Kaschiervorrichtung befinden.

Bei einer bevorzugten Ausführungsform umfasst das Mehrkomponenten-Klebstoffsystem ein Zweikomponenten-Klebstoffsystem auf Phenolharzbasis. Phenolharzklebstoffe umfassen als Hauptbestandteil Formaldehyd, wobei weitere Bestandteile, wie beispielsweise Phenol, Harnstoff und Melamin vorhanden sind.

Vorzugsweise liegt die Temperatur des Leimes vor dem Auftragen unterhalb von Raumtemperatur. Gemäß einer bevorzugten Ausführungsform der Erfindung liegt die Temperatur des Leimes in einem Bereich von 17 bis -20 °C, vorzugsweise von 15 bis -8 °C, bevorzugter von 12 bis 0°C, am meisten bevorzugt von 12 bis 6°C. Die Kühlung des Leimes erfolgt vorzugsweise über ein externes Kühlgerät und/oder eine in der Leim-Auftragsvorrichtung angeordnete Kühleinheit. Bei der vorliegenden Erfindung wird durch ein sehr leistungsfähiges Kühlgerät, das außerhalb der Leim-Auftragsvorrichtung angeordnet ist, und/oder eine Kühleinheit, wie z.B. eine Kühlschlange, in einem bauseits an der Leim-Auftragsvorrichtung angeordneten Leimvorratsbehälter, der Leim auf Temperaturen unterhalb von Raumtemperatur gekühlt. Die Leistungsfähigkeit des Kühlgeräts und/oder der Kühleinheit kann gemäß den jeweiligen Anforderungen gewählt werden, so dass die gewünschte Temperatur des Leimes erreichbar ist. Mit dem Begriff "Raumtemperatur" sind Temperaturen im Bereich von 18 bis 25°C gemeint. Durch die Anordnung des leistungsfähigen Kühlgeräts und/oder der Kühlschlange kann der Leim bis auf Temperaturen von unter Null Grad Celsius gekühlt werden. Durch ihre speziellen Eigenschaften, ähnlich denen von Alkoholen, lassen die Leime des Mehrkomponenten-Klebstoffsystems, wie beispielsweise das Zweikomponenten-Klebstoffsystem auf Phenolharzbasis, eine Kühlung bis in den Minusgradbereich zu. Durch die Abkühlung des Leimes auf Temperaturen unterhalb von Raumtemperatur wird die Polykondensation (Abspaltung von Wasser) gehemmt. Im Gegensatz zum Stand der Technik wird somit nicht nur die Wärmeübertragung von den Trägerstücken aus der Abdunstzone in die Leim-Auftragsvorrichtung verhindert, sondern auch die Reaktionszeit des Klebstoffsystems aus Härter und Leim gehemmt. Durch die Hemmung der Polykondensation wird auch der Transport von Trägerstücken in einer Reaktionszone mit einer Länge von mehr als 3,0 m ermöglicht. Folglich können auch Trägerstücke mit einer Gesamtlänge von mehr als 3,0 m versatzfrei kaschiert werden.

Vorzugsweise sind in Durchlaufrichtung nach der Kaschiervorrichtung eine Nachpressvorrichtung zum Nachpressen sowie eine Glättvorrichtung zum Glätten des kaschierten Trägerstücks angeordnet. Bei einer bevorzugten Ausführungsform umfassen die Kaschiervorrichtung und die Nachpressvorrichtung jeweils zumindest einen Kalander mit Stahlwalzen, und die Glättvorrichtung umfasst zumindest einen Kalander mit elastischer Walzenoberfläche. Der Begriff "Kalander" umfasst ein System aus zumindest zwei aufeinander angeordneten Walzen, die vorzugsweise beheizbar sind. Der zumindest eine Kalander der Kaschiervorrichtung umfasst Stahlwalzen, mit denen die Beschichtungslage auf das jeweilige Trägerstück kaschiert wird. Die Nachpressvorrichtung umfasst zumindest einen Kalander mit Stahlwalzen, die zum Glätten der aufkaschierten Beschichtungslage dienen. In der Glättvorrichtung ist zumindest ein Kalander mit elastischer Walzenoberfläche angeordnet. Wie oben erwähnt, erforderte eine Kaschierung mit Mehrkomponenten-Klebstoffsystemen Wärme und hohe Drücke im Kalander, und deshalb wurde das Kaschieren mit Walzen mit einer elastischen Oberfläche bisher nicht als sinnvoll erachtet. Die Anmelder der vorliegenden Erfindung haben jedoch herausgefunden, dass eine der Kaschier- und Nachpressvorrichtung nachgeschaltete Glättvorrichtung die Qualität der Kaschierung erheblich verbessern kann. Die zusätzliche Glättung wird hierbei durch die verzögerte Reaktionszeit des Klebstoffsystems ermöglicht, die durch die Kühlung des Leimes bedingt ist. Bei der erfindungsgemäßen Ausgestaltung übertragen der zumindest eine Kalander mit Stahlwalzen der Kaschiervorrichtung und der zumindest eine Kalander mit Stahlwalzen der Nachpressvorrichtung die erforderliche Wärme und die benötigten Drücke für die Leimfuge. Der zumindest eine Kalander mit elastischer Walzenoberfläche der Glättvorrichtung dient zum weiteren Glätten der Oberfläche des kaschierten Trägerstücks, wobei Unebenheiten, Schüsselungen usw. ausgeglichen werden.

Durch die Anordnung der Glättvorrichtung, die zumindest einen Kalander mit elastischer Walzenoberfläche umfasst, können somit Unebenheiten in der Oberfläche des Trägerstücks, auch bei Mehrkomponenten-Klebstoffsystemen, wie beispielsweise Zweikomponenten-Klebstoffsystemen auf Phenolharzbasis, problemlos ausgeglichen und kaschiert werden. Dadurch kann die Qualität der fertig kaschierten Trägerstücke erheblich verbessert werden. Weiterhin eignet sich die Kombination von Stahlwalzen und Walzen mit elastischer Oberfläche auch für die Kaschierung von Hohlkammer-Trägerstücken, wie beispielsweise Türen und Wabenplatten. Mit den einzelnen Walzen können jeweils relativ geringere Drücke auf das Trägerstück aufgebracht werden und somit kann eine Beschädigung des Trägerstücks durch zu hohen Druck verhindert werden. Mittels der Kombination unterschiedlicher Walzen können auch Hohlkammer-Trägerstücke in höchster Qualität mit Mehrkomponenten-Klebstoffsystemen, insbesondere Zweikomponenten-Klebstoffsystemen auf Phenolharzbasis, kaschiert werden.

Bei einer bevorzugten Ausführungsform weist der zumindest eine Kalander mit Stahlwalzen der Kaschiervorrichtung eine niedrigere Temperatur auf als der zumindest eine Kalander mit Stahlwalzen der Nachpressvorrichtung und/oder der zumindest eine Kalander mit elastischer Walzenoberfläche der Glättvorrichtung. Vorzugsweise ist die Temperatur des nachfolgenden Kalanders, in Durchlaufrichtung von der Kaschiervorrichtung zur Glättvorrichtung, jeweils zu dem vorhergehenden Kalander graduell erhöht. Durch die Anordnung von mehreren, aufeinander folgenden Kalandern ist es möglich, unterschiedliche Temperaturen unmittelbar hintereinander in die Leimfuge einzubringen. Vorzugsweise ist die Temperatur an den Stahlwalzen der Kaschiervorrichtung so gewählt, dass diese auch für Kunststoff-Beschichtungslagen verträglich ist, d.h. die Kunststoff-Beschichtungslagen nicht zum Schmelzen bringt. Besonders bevorzugt beträgt die Temperatur an den Stahlwalzen der Kaschiervorrichtung ca. 70 bis 100°C. In diesem Temperaturbereich können Beschichtungslagen üblicher Kunststoffe, wie beispielsweise Polyethylen (PE), Polypropylen (PP), Polyvinylchlorid (PVC) oder Polyethylenterephthalat (PET), aufgewalzt werden, ohne dass es zu einer Dampfblasenbildung kommt. Nach dem Aufbringen der Kunststoff-Beschichtungslage mit der relativ niedrigen Walzentemperatur, kann nun in Durchlaufrichtung die Temperatur der jeweils nachfolgenden Walzen erhöht werden, ohne die Kunststoff-Beschichtungslage in den plastischen Bereich zu bringen und zu beschädigen. Vorzugsweise wird die Temperatur von der Nachpressvorrichtung zur Glättvorrichtung schrittweise auf ca. 160°C an den Walzen der Glättvorrichtung gesteigert. Durch die Anordnung mehrerer Kalander hintereinander ist es möglich, durch die Einstellung unterschiedlicher Temperaturen an den jeweiligen Walzen, Kunststoff-Beschichtungslagen mit höchster Qualität zu kaschieren. Dabei wird bei den fertig kaschierten Trägerstücken eine Aushärtung oder zumindest eine für die Weiterverarbeitung notwendige Anfangsfestigkeit der Leimfuge erreicht.

Bei einer besonders bevorzugten Ausführungsform umfassen die Kaschiervorrichtung und die Nachpressvorrichtung jeweils einen Kalander mit Stahlwalzen, und die Glättvorrichtung umfasst zwei Kalander mit elastischer Walzenoberfläche. Die elastische Walzenoberfläche kann ein Gummi oder Silikon umfassen. Das Gummi kann Naturgummi oder Kunstgummi umfassen. Die Kombination der aufeinander folgend angeordneten Walzen mit unterschiedlichen Walzenoberflächen, d.h. zunächst zwei Stahlwalzen gefolgt von zwei Walzen mit elastischer Oberfläche, ermöglicht es, Hohlkammer-Trägerstücke ohne Beschädigung und in höchster Qualität zu kaschieren. Somit ist es möglich, bei der Kaschierung mit Mehrkomponenten-Klebstoffsystemen, insbesondere Zweikomponenten-Klebstoffsysteme auf Phenolharzbasis, Unebenheiten in der Oberfläche von Hohlkammer-Trägerstücken auszugleichen und eine hervorragende Kaschierqualität zu erzielen. Ferner kann bei dieser Anordnung von insgesamt vier Kalandern hintereinander die Temperatur der jeweiligen Walzen der Kalander langsam gesteigert werden. Die Stahlwalzen des Kalanders der Kaschiervorrichtung weisen vorzugsweise eine Temperatur zwischen 70 und 100°C auf, die, wie oben erwähnt, die Verarbeitung von Kunststoff-Beschichtungslagen ermöglicht. Anschließend wird die Temperatur schrittweise bei auf ca. 160°C gesteigert, von den Walzen des Kalanders der Nachpressvorrichtung, über die Walzen des ersten Kalanders der Glättvorrichtung, zu den Walzen des zweiten Kalanders der Glättvorrichtung. Durch die schrittweise Steigerung der Temperatur findet die Polykondensation ebenfalls schrittweise statt, d.h. das Wasser wird stufenweise abgespaltet. Aufgrund der stufenweisen Abspaltung von Wasser verlängert sich der Zeitraum entsprechend, in dem das Trägerstück das abgespaltene Wasser aufnimmt. Die stufenweise Abspaltung von Wasser, und die daraus resultierende verzögerte Aufnahme des Wassers durch das Trägerstück, führen zu einem ebenfalls langsameren Erstarren der Leimfuge. Hierdurch können Trägerstücke "nass in nass" kaschiert werden, dass heißt, der feuchte Leim wird auf die noch feuchte Härterschicht aufgebracht. Insbesondere ist es möglich, Kunststoff-Beschichtungslagen mit Mehrkomponenten-Klebstoffsystemen, vorzugsweise Zweikomponenten-Klebstoffsysteme auf Phenolharzbasis, nass in nass zu kaschieren. Dadurch, dass die Leimfuge erst nach und nach erstarrt, und nicht bereits an der Nachpressvorrichtung wie im Stand der Technik, ist es möglich, die Oberfläche des Trägerstücks noch effektiv mit den Walzen mit elastischer Oberfläche der Glättvorrichtung zu bearbeiten. Die durch die nachträgliche Glättung mit Walzen mit elastischer Oberfläche entstehende Oberflächenqualität des fertig kaschierten Werkstücks ist sehr hochwertig. Die oben beschriebene Kaschierung nass in nass ist sowohl bei der Kaschierung von Folien als auch von Papierbahnen besonders vorteilhaft.

Die Beschichtungslage kann jede geeignete Art von Folien oder Papieren aufweisen, die wiederum verschiedenste Dekore, z.B. Holzdekor, aufweisen können. Bei einer bevorzugten Ausführungsform umfasst die Beschichtungslage ein Kunststoffmaterial, vorzugsweise eine Kunststofffolie, die ein Dekor aufweisen kann. Als Kunststofffolien werden vorzugsweise PE-, PET- oder PP-Folien verwendet.

Der zeitliche Zyklus des Mehrkomponenten-Klebstoffsystems, insbesondere eines Zweikomponenten-Klebstoffsystems auf Phenolharzbasis, kann durch verschiedene Faktoren verändert bzw. verzögert werden, um ein Verarbeiten auch von langen Trägerstücken zu ermöglichen. Unter zeitlichem Zyklus wird die Dauer der Gelierphase des Mehrkomponenten-Klebstoffsystems verstanden, d.h. die Dauer, in der die Klebewirkung des Mehrkomponenten-Klebstoffsystems aus Härter und Leim ausgebildet wird. Ein Ausrichten der Trägerstücke ist lediglich in dieser Gelierphase möglich. Beispielsweise können folgende Faktoren den zeitlichen Zyklus des Mehrkomponenten-Klebstoffsystems in der Kaschieranlage beeinflussen und verzögern, um so die Verlängerung der Strecke zum Ausrichten zu ermöglichen: Temperaturreduzierung des Vorpresskalanders; Temperaturreduzierung der Abdunstzone; Auftragsmengenreduzierung des Härters; Auftragsmengensteigerung des Leimes; chemische Reaktionshemmung des Leimes mit dem Härter durch extreme Kühlung des Leimes, beispielsweise über ein externes Kühlgerät; Produktionsgeschwindigkeitserhöhung der gesamten Kaschieranlage; und/oder Reduzierung des Katalysators (Reaktionsbeschleuniger) im Härter. Die Verlängerung der Reaktionszone ist besonders vorteilhaft in der Completeline-Technologie (Flächenkaschieren mit anschließender Kanten-Ummantelung der Trägerstücke). In der Completeline-Technologie darf aus verfahrenstechnischen Gründen in der Kaschieranlage kein seitlicher Versatz der Trägerstücke entstehen. Erfindungsgemäß werden die Trägerstücke im Durchlauf in der Reaktionszone mit einer Ausrichtvorrichtung versatzfrei ausgerichtet. Die Ausrichtvorrichtung kann ein seitliches Führungssystem zur versatzfreien Ausrichtung der aufeinander folgenden Trägerstücke umfassen. Vorzugsweise erfolgt die Ausrichtung der Trägerstücke mittenzentriert in der Reaktionszone. Eine Modifizierung der bekannten Kaschieranlagen würde lediglich die Verarbeitung von Trägerstücken mit einer Länge von weniger als ca. 3,0m ermöglichen, da die Strecke bei der herkömmlichen Kaschieranlage, wie oben beschrieben, in der Regel von der Leim-Auftragsvorrichtung zur Kaschiervorrichtung maximal ca. 3,0m beträgt. Eine versatzfreie Ausrichtung von längeren Trägerstücken wäre somit nicht möglich, da die Trägerstücke immer in der Leim-Auftragsvorrichtung und/oder der Kaschiervorrichtung eingespannt wären. Durch die Verlängerung der Reaktionszone und die Verzögerung des zeitlichen Zyklusses des Mehrkomponenten-Klebstoffsystems, wird erstmals die Verarbeitung von längeren Trägerstücken, bis zu 6,5m oder mehr, in der Completeline-Technologie ermöglicht.

In einem weiteren Aspekt stellt die Erfindung ein Verfahren zum Kaschieren von massiven und Hohlkammer-Trägerstücken mit Mehrkomponenten-Klebstoffsystemen nach Anspruch 15 bereit.

Vorzugsweise umfasst das Mehrkomponenten-Klebstoffsystem ein Zweikomponenten-Klebstoffsystem auf Phenolharzbasis. Bei einer bevorzugten Ausführungsform wird der Leim vor dem Auftragen auf eine Temperatur gekühlt, die unterhalb von Raumtemperatur liegt. Der Leim kann auf eine Temperatur in dem Bereich von 17 bis -20 °C gekühlt werden, vorzugsweise von 15 bis -8 °C, bevorzugter von 12 bis 0°C, am meisten bevorzugt von 12 bis 6°C.

Vorzugsweise folgen auf den Schritt des Kaschierens ein Schritt des Nachpressens und ein Schritt des Glättens des kaschierten Trägerstücks. Der Schritt des Kaschierens und der Schritt des Nachpressens kann jeweils mit zumindest einem Kalander mit Stahlwalzen durchgeführt werden, und der Schritt des Glättens kann mit zumindest einem Kalander mit elastischer Walzenoberfläche durchgeführt werden. Vorzugsweise weist der zumindest eine Kalander mit Stahlwalzen, mit dem der Schritt des Kaschierens durchgeführt wird, eine niedrigere Temperatur auf als der zumindest eine Kalander mit Stahlwalzen, mit dem der Schritt des Nachpressens durchgeführt wird, und/oder der zumindest eine Kalander mit elastischer Walzenoberfläche, mit dem der Schritt des Glättens durchgeführt wird. Die Temperatur des nachfolgenden Kalanders kann, von dem Schritt des Kaschierens zu dem Schritt des Glättens, jeweils zu dem vorhergehenden Kalander graduell erhöht werden. Bei einer besonders bevorzugten Ausführungsform werden der Schritt des Kaschierens und der Schritt des Nachpressens jeweils mit einem Kalander mit Stahlwalzen durchgeführt, und der Schritt des Glättens wird mit zwei Kalandern mit elastischer Walzenoberfläche durchgeführt.

Bei einer bevorzugten Ausführungsform des erfindungsgemäßen Verfahrens umfasst die Beschichtungslage ein Kunststoffmaterial, vorzugsweise eine Kunststofffolie, die ein Dekor aufweisen kann.

Vorzugsweise werden der Schritt des Auftragens des Leimes in einer Leim-Auftragsvorrichtung und der Schritt des Kaschierens in einer Kaschiervorrichtung durchgeführt, wobei das Trägerstück beim Schritt des Ausrichtens in seiner gesamten Länge die Leim-Auftragsvorrichtung bereits verlassen hat, und das Trägerstück mit seiner vorlaufenden Kante die Kaschiervorrichtung noch nicht erreicht hat.

Vorzugsweise liegen das Trägerstück und das vorlaufende Trägerstück bei den Schritten des Auftragens des Härters, des Abtrocknens des Härters und des Auftragens des Leimes Stoß an Stoß aneinander. Das Trägerstück und das vorlaufende Trägerstück werden vorzugsweise während dem Schritt des Ausrichtens auseinander gezogen, wobei das Trägerstück dann versatzfrei ausgerichtet wird.

Im Folgenden wird ein Ausführungsbeispiel der Erfindung anhand von Zeichnungen näher erläutert. Es zeigen:

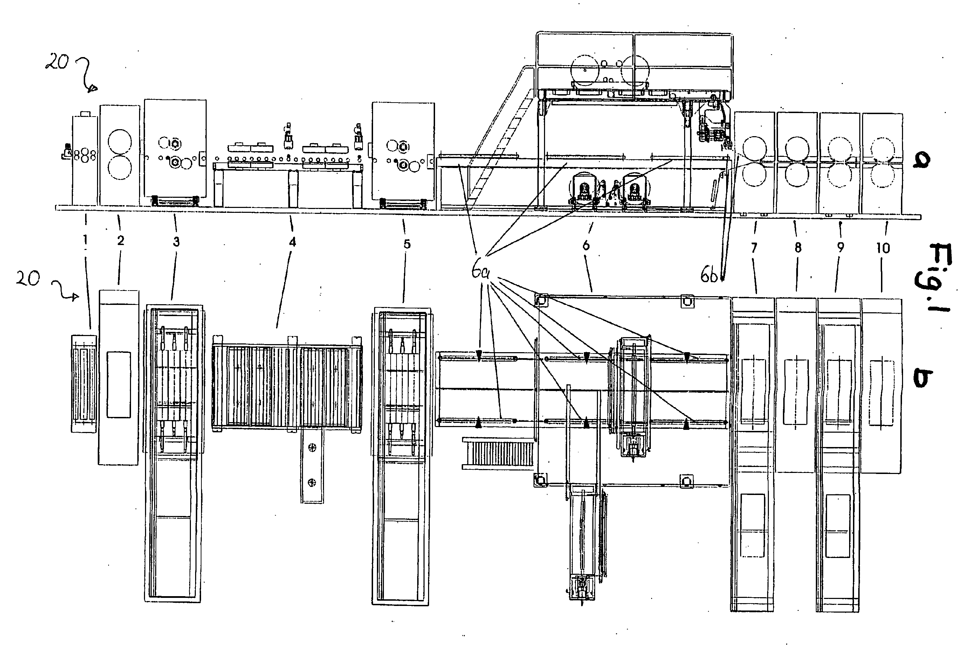

Fig. 1a eine Seitenansicht einer bevorzugten Ausführungsform der erfindungsgemäßen Kaschieranlage; und
Fig. 1b eine Draufsicht der in Fig. 1a dargestellten erfindungsgemäßen Kaschieranlage.

Unter Bezugnahme auf die Fig. 1a und Fig. 1b wird eine Anlage und ein Verfahren zum versatzfreien Kaschieren von massiven und Hohlkammer-Trägerstücken mit Mehrkomponenten-Klebstoffsystemen gemäß einer bevorzugten Ausführungsform der Erfindung beschrieben.

Hierbei zeigen die Fig. 1a und 1b eine bevorzugte Ausführungsform einer erfindungsgemäßen Kaschieranlage, die im Allgemeinen mit 20 bezeichnet wird. Der Aufbau der Kaschieranlage 20 sowie das an der Kaschieranlage 20 durchgeführte erfindungsgemäße Verfahren werden nachfolgend erläutert. Bei der bevorzugten Ausführungsform erfolgt die Kaschierung mit einem Zweikomponenten-Klebstoffsystem auf Phenolharzbasis. Ein zu kaschierendes Trägerstück (nicht gezeigt) wird zunächst durch eine Reinigungsvorrichtung 1 mit Reinigungsbürsten geführt. Der Aufbau einer derartigen Reinigungsvorrichtung 1 ist auf dem Gebiet der Kaschieranlagen bekannt. Nachfolgend wird das Trägerstück durch eine Vorpressvorrichtung 2 geführt, bevor es in Durchlaufrichtung, d.h. von links nach rechts in den Figuren, eine Härter-Auftragsvorrichtung 3 durchläuft. Der Aufbau der Vorpressvorrichtung 2 und Härter-Auftragsvorrichtung 3 sind ebenfalls in der Technik bekannt.

Nachfolgend werden die Trägerstücke durch eine Abdunstzone 4 transportiert, in der jeweils oberhalb und unterhalb des Trägerstücks eine Abdunstvorrichtung 4a zum Abtrocknen des Härters angeordnet ist. Die Abdunstvorrichtung 4a kann mehrere Infrarot-Strahler umfassen, die Wärme auf das Trägerstück aufbringen und so ein Abtrocknen des Härters bewirken. Es wird ebenfalls erwägt, dass ein Abtrocknen des Härters neben den Infrarot-Strahlern durch Luftströme bewirkt wird. In diesem Fall kann eine hohe Luftströmung durch die Abdunstvorrichtung geleitet werden, so dass bei geringerer Wärmezufuhr durch die Infrarot-Strahler dennoch ein effektives Abtrocknen des Härters bewirkt wird. Hierbei wird das Trägerstück durch den Luftstrom gekühlt, so dass der Temperaturunterschied zwischen Trägerstück und Leim gering gehalten werden kann.

Nachdem die Trägerstücke die Abdunstzone 4 verlassen haben, werden sie zu einer Leim-Auftragsvorrichtung 5 zum Auftragen eines Leimes auf den abgetrockneten Härter transportiert. In der vorliegenden Ausführungsform wird der Leim in der Leim-Auftragsvorrichtung 5 über ein leistungsfähiges, externes Kühlgerät (nicht gezeigt) auf eine Temperatur unterhalb von Raumtemperatur gekühlt. Die Kühlung des Leimes erfolgt vorzugsweise auf Temperaturen zwischen 12 und 6°C. Durch das Kühlen des Leimes wird die Polykondensation des Zweikomponenten-Klebstoffsystems auf Phenolharzbasis gehemmt, was den nachfolgenden Transport auf einer verlängerten Ausrichtstrecke in einer Reaktionszone 6 ermöglicht.

Im Anschluss an die Leim-Auftragsvorrichtung 5 werden die Trägerstücke der Reaktionszone 6 zugeführt. In der Reaktionszone 6 reagiert der Leim mit dem Härter, d.h. es findet die Gelierphase des Zweikomponenten-Klebstoffsystems auf Phenolharzbasis statt. Bei der bevorzugten Ausführungsform weist die Reaktionszone 6 eine Länge von ca. 7,5m auf, so dass Trägerstücke mit einer Länge von bis zu ca. 6,5m versatzfrei ausgerichtet werden können. Die Länge der Reaktionszone 6 kann jedoch den jeweiligen Erfordernissen angepasst werden, so dass auch Trägerstücke mit einer Länge von mehr als 6,5m versatzfrei ausrichtbar sind. Das Ausrichten erfolgt durch eine in der Reaktionszone 6 angeordnete Ausrichtvorrichtung 6a, mittels derer das Trägerstück mit einem vorlaufenden Trägerstück versatzfrei ausgerichtet werden kann. Die Trägerstücke durchlaufen, bei der in den Fig. 1a und 1b gezeigten bevorzugten Ausführungsform, die Kaschieranlage 20 Stoß an Stoß bis sie der Reaktionszone 6 zugeführt werden. In der Reaktionszone 6 werden das Trägerstück und das vorlaufende Trägerstück vor dem Ausrichten mit der Ausrichtvorrichtung 6a auseinander gezogen. Bei der in den Fig. 1a und 1b gezeigten Ausführungsform umfasst die Ausrichtvorrichtung 6a ein mehrteiliges Führungssystem zur versatzfreien Ausrichtung der Trägerstücke. Insbesondere umfasst die Ausrichtvorrichtung 6a jeweils drei an jeder Längsseite der Reaktionszone 6 angeordnete Führungselemente (siehe Fig. 1b). Zur Ausrichtung der Trägerstücke bewegen sich die Führungselemente, wie durch die Pfeile in Fig. 1b angedeutet, gleichzeitig zur Mitte der Reaktionszone 6 hin und verschieben das Trägerstück in Richtung der Mitte der Reaktionszone 6, bis sie das jeweilige Trägerstück an seinen beiden Längsseiten berühren und somit ein mittenzentriertes Ausrichten jeweiliger Trägerstücke bewirken.

Von der Reaktionszone 6 werden die Trägerstücke zu der Kaschiervorrichtung 7 transportiert. Die Kaschiervorrichtung 7 umfasst einen Kalander mit Stahlwalzen, der die zulaufende Beschichtungslage 6b unter Druck und Temperatur auf die Trägerstücke kaschiert. Anschließend wird das kaschierte Trägerstück einer Nachpressvorrichtung 8 zugeführt, die ebenfalls einen Kalander mit Stahlwalzen umfasst. Nach Verlassen der Nachpressvorrichtung 8 wird das Trägerstück einer Glättvorrichtung 9, 10 zugeführt, die zwei Kalander mit elastischer Walzenoberfläche umfasst. Bei der bevorzugten Ausführungsform umfassen die zwei Kalander der Glättvorrichtung 9, 10 Walzen mit einer Gummioberfläche. Durch den Einsatz von gummierten Walzen können Unebenheiten in der Oberfläche des Trägerstücks, auch bei Zweikomponenten-Klebstoffsystemen auf Phenolharzbasis, problemlos ausgeglichen und kaschiert werden. Ermöglicht wird die nachträgliche Glättung durch die verzögerte Reaktionszeit des Klebstoffsystems, die durch eine Kühlung des Leimes auf Temperaturen unterhalb von Raumtemperatur bedingt ist. Erfindungsgemäß ist zusätzlich die Glättvorrichtung 9, 10 in Durchlaufrichtung nach der Kaschiervorrichtung 7 und der Nachpressvorrichtung 8 angeordnet. Somit ist es möglich auch Hohlkammer-Trägerstücke, wie beispielsweise Türen und Wabenplatten, in höchster Qualität mit Zweikomponenten-Klebstoffsystemen auf Phenolharzbasis zu kaschieren, da mit den einzelnen Kalandern jeweils relativ geringere Drücke auf das Trägerstück aufgebracht werden können. Hierdurch kann eine Beschädigung des Trägerstücks durch zu hohen Druck vermieden werden.

Bei der vorliegenden Ausführungsform ist die Temperatur des nachfolgenden Kalanders, in Durchlaufrichtung von der Kaschiervorrichtung 7 zur Glättvorrichtung 9, 10, jeweils zu dem vorhergehenden Kalander graduell erhöht. Die Temperatur an den Stahlwalzen der Kaschiervorrichtung 7 liegt vorzugsweise zwischen 70 und 100°C, so dass auch Beschichtungslagen aus Kunststoff aufgewalzt werden können, ohne dass es zu einer Dampfblasenbildung kommt. Nach dem Aufbringen der Kunststoff-Beschichtungslage mit der relativ niedrigen Walzentemperatur an der Kaschiervorrichtung 7, wird nun die Temperatur der jeweiligen Walzen von der Nachpressvorrichtung 8 zur Glättvorrichtung 9, 10 schrittweise erhöht, wobei die Temperatur bis zur Walze der Glättvorrichtung 10 auf ca. 160°C erhöht wird. Aufgrund der Anordnung mehrerer Kalander hintereinander ist es somit auch möglich, durch die Einstellung unterschiedlicher Temperaturen an den jeweiligen Walzen, Kunststoff-Beschichtungslagen mit höchster Qualität zu kaschieren.

Die spezielle erfindungsgemäße Anordnung und Ausgestaltung der Kalander und die dadurch erzielten Vorteile, wie beispielsweise die Möglichkeit einer nachträglichen Glättung, die Kaschierung von Hohlkammer-Trägerstücken und die Verarbeitung von Kunststofffolien, ist auch unabhängig von der Ausrichtung der Trägerstücke in der Reaktionszone ein vorteilhafter Aspekt zur Optimierung von Kaschierverfahren.

## Patentansprüche

1. Anlage (20) zum Kaschieren von massiven und Hohlkammer-Trägerstücken mit Mehrkomponenten-Klebstoffsystemen, umfassend:
- eine Härter-Auftragsvorrichtung (3) zum Auftragen eines Härters auf zumindest eine Oberfläche eines zu kaschierenden Trägerstücks;
- eine Abdunstvorrichtung (4) zum Abtrocknen des Härters;
- eine Leim-Auftragsvorrichtung (5) zum Auftragen eines Leimes auf den abgetrockneten Härter;
- eine Reaktionszone (6) zum Reagieren des Leimes mit dem Härter; und
- eine Kaschiervorrichtung (7) zum Kaschieren einer zulaufenden Beschichtungslage (6b) auf das Trägerstück; **gekennzeichnet durch** eine in der Reaktionszone (6) angeordnete Ausrichtvorrichtung (6a) zum versatzfreien Ausrichten des Trägerstücks mit einem vorlaufenden Trägerstück, wobei
die Reaktionszone (6) eine größere Länge als die Gesamtlänge des zu kaschierenden Trägerstücks aufweist, und die Länge der Reaktionszone (6) derart ausgestaltet ist, dass in der Reaktionszone (6) Trägerstücke versatzfrei ausrichtbar sind, deren Gesamtlänge mehr als 6,5m beträgt.

2. Anlage (20) nach Anspruch 1, bei der das Mehrkomponenten-Klebstoffsystem ein Zweikomponenten-Klebstoffsystem auf Phenolharzbasis umfasst.

3. Anlage (20) nach Anspruch 1 oder 2, bei der die Temperatur des Leimes vor dem Auftragen unterhalb von Raumtemperatur liegt.

4. Anlage (20) nach Anspruch 3, bei der die Temperatur des Leimes in einem Bereich von 17 bis -20 °C liegt, vorzugsweise von 15 bis -8 °C, bevorzugter von 12 bis 0°C, am meisten bevorzugt von 12 bis 6°C.

5. Anlage (20) nach Anspruch 3 oder 4, bei der die Kühlung des Leimes über ein externes Kühlgerät und/oder eine in der Leim-Auftragsvorrichtung angeordnete Kühleinheit erfolgt.

6. Anlage (20) nach einem der Ansprüche 3 bis 5, bei der in Durchlaufrichtung nach der Kaschiervorrichtung (7) eine Nachpressvorrichtung (8) zum Nachpressen sowie eine Glättvorrichtung (9, 10) zum Glätten des kaschierten Trägerstücks angeordnet sind.

7. Anlage (20) nach Anspruch 6, bei der die Kaschiervorrichtung (7) und die Nachpressvorrichtung (8) jeweils zumindest einen Kalander mit Stahlwalzen umfassen, und wobei die Glättvorrichtung (9, 10) zumindest einen Kalander mit elastischer Walzenoberfläche umfasst.

8. Anlage (20) nach Anspruch 7, bei welcher der zumindest eine Kalander mit Stahlwalzen der Kaschiervorrichtung (7) eine niedrigere Temperatur aufweist als der zumindest eine Kalander mit Stahlwalzen der Nachpressvorrichtung (8) und/oder der zumindest eine Kalander mit elastischer Walzenoberfläche der Glättvorrichtung (9, 10).

9. Anlage (20) nach Anspruch 7, bei der die Temperatur des nachfolgenden Kalanders, in Durchlaufrichtung von der Kaschiervorrichtung (7) zur Glättvorrichtung (9, 10), jeweils zu dem vorhergehenden Kalander graduell erhöht ist.

10. Anlage (20) nach einem der Ansprüche 7 bis 9, bei der die Kaschiervorrichtung (7) und die Nachpressvorrichtung (8) jeweils einen Kalander mit Stahlwalzen umfassen, und wobei die Glättvorrichtung (9, 10) zwei Kalander mit elastischer Walzenoberfläche umfasst.

11. Anlage (20) nach einem der Ansprüche 7 bis 10, bei der die elastische Walzenoberfläche ein Gummi oder Silikon umfasst.

12. Anlage (20) nach einem der Ansprüche 8 bis 11, bei der die Beschichtungslage (6b) ein Kunststoffmaterial, vorzugsweise eine Kunststofffolie, umfasst.

13. Anlage (20) nach einem der vorhergehenden Ansprüche, bei der die Länge der Reaktionszone (6) derart ausgestaltet ist, dass das Trägerstück bei der Ausrichtung in seiner gesamten Länge die Leim-Auftragsvorrichtung (5) bereits verlassen hat, und wobei es mit seiner vorlaufenden Kante die Kaschiervorrichtung (7) noch nicht erreicht hat.

14. Anlage (20) nach Anspruch 13, bei der die Länge der Reaktionszone (6) derart ausgestaltet ist, dass in der Reaktionszone (6) Trägerstücke mit einer Gesamtlänge von vorzugsweise bis zu 6,5m versatzfrei ausrichtbar sind.

15. Verfahren zum Kaschieren von massiven und Hohlkammer-Trägerstücken mit Mehrkomponenten-Klebstoffsystemen, die folgenden Schritte umfassend:
- Auftragen eines Härters auf zumindest eine Oberfläche eines zu kaschierenden Trägerstücks;
- Abtrocknen des Härters;
- Auftragen eines Leimes auf den abgetrockneten Härter;
- Reagieren des Leimes mit dem Härter; und
- Kaschieren einer zulaufenden Beschichtungslage (6b) auf das Trägerstück;
**dadurch gekennzeichnet, dass**, der zeitliche Zyklus des Mehrkomponenten-Klebstoffsystems verzögert wird, und während des Schritts des Reagierens des Leimes mit dem Härter, das Trägerstück versatzfrei mit einem vorlaufenden Trägerstück ausgerichtet wird, wobei die Reaktionszone (6) eine größere Länge als die Gesamtlänge des zu kaschierenden Trägerstücks aufweist, so dass Trägerstücke versatzfrei ausrichtbar sind, deren Gesamtlänge mehr als 6,5 m beträgt.

16. Verfahren nach Anspruch 15, wobei das Mehrkomponenten-Klebstoffsystem ein Zweikomponenten-Klebstoffsystem auf Phenolharzbasis umfasst.

17. Verfahren nach Anspruch 15 oder 16, wobei der Leim vor dem Auftragen auf eine Temperatur gekühlt wird, die unterhalb von Raumtemperatur liegt.

18. Verfahren nach Anspruch 17, wobei der Leim auf eine Temperatur in dem Bereich von 17 bis -20 °C gekühlt wird, vorzugsweise von 15 bis -8 °C, bevorzugter von 12 bis 0°C, am meisten bevorzugt von 12 bis 6°C.

19. Verfahren nach Anspruch 17 oder 18, ferner, auf den Schritt des Kaschierens folgend, mit einem Schritt des Nachpressens und einem Schritt des Glättens des kaschierten Trägerstücks.

20. Verfahren nach Anspruch 19, wobei der Schritt des Kaschierens und der Schritt des Nachpressens jeweils mit zumindest einem Kalander mit Stahlwalzen durchgeführt werden, und der Schritt des Glättens mit zumindest einem Kalander mit elastischer Walzenoberfläche durchgeführt wird.

21. Verfahren nach Anspruch 20, wobei der zumindest eine Kalander mit Stahlwalzen, mit dem der Schritt des Kaschierens durchgeführt wird, eine niedrigere Temperatur aufweist als der zumindest eine Kalander mit Stahlwalzen, mit dem der Schritt des Nachpressens durchgeführt wird, und/oder der zumindest eine Kalander mit elastischer Walzenoberfläche, mit dem der Schritt des Glättens durchgeführt wird.

22. Verfahren nach Anspruch 20, wobei die Temperatur des nachfolgenden Kalanders, von dem Schritt des Kaschierens zu dem Schritt des Glättens, jeweils zu dem vorhergehenden Kalander graduell erhöht wird.

23. Verfahren nach einem der Ansprüche 20 bis 22, wobei der Schritt des Kaschierens und der Schritt des Nachpressens jeweils mit einem Kalander mit Stahlwalzen durchgeführt werden, und wobei der Schritt des Glättens mit zwei Kalandern mit elastischer Walzenoberfläche durchgeführt wird.

24. Verfahren nach einem der Ansprüche 21 bis 23, wobei die Beschichtungslage (6b) ein Kunststoffmaterial, vorzugsweise eine Kunststofffolie, umfasst.

25. Verfahren nach einem der Ansprüche 15 bis 24, wobei der Schritt des Auftragens des Leimes in einer Leim-Auftragsvorrichtung (5) und der Schritt des Kaschierens in einer Kaschiervorrichtung (7) durchgeführt werden, wobei das Trägerstück beim Schritt des Ausrichtens in seiner gesamten Länge die Leim-Auftragsvorrichtung (5) bereits verlassen hat, und wobei es mit seiner vorlaufenden Kante die Kaschiervorrichtung (7) noch nicht erreicht hat.

26. Verfahren nach Anspruch 25, wobei Trägerstücke mit einer Gesamtlänge von vorzugsweise bis zu 6,5m versatzfrei ausrichtbar sind.

27. Verfahren nach einem der Ansprüche 15 bis 26, wobei das Trägerstück und das vorlaufende Trägerstück bei den Schritten des Auftragens des Härters, des Abtrocknens des Härters und des Auftragens des Leimes Stoß an Stoß aneinander liegen.

28. Verfahren nach Anspruch 27, wobei das Trägerstück und das vorlaufende Trägerstück während dem Schritt des Ausrichtens auseinander gezogen werden, wobei das Trägerstück dann versatzfrei ausgerichtet wird.

## Claims

1. Apparatus (20) for laminating solid and double-walled substrate pieces with multi-component adhesive systems, comprising:
- a hardener applicator (3) for applying a hardener to at least one surface of a substrate piece to be laminated;
- an evaporator (4) for drying the hardener;
- a glue applicator (5) for applying a glue to the dried hardener;
- a reaction zone (6) for reacting the glue with the hardener; and
- a laminator (7) for laminating an approaching coating layer (6b) on the substrate piece;
**characterised by** an aligning device (6a) arranged in the reaction zone (6) for aligning the substrate piece with a substrate piece in front, eliminating any offset, wherein
the reaction zone (6) has a longer length than the total length of the substrate piece to be laminated, and the length of the reaction zone (6) is designed in such a way that substrate pieces of which the total length is more than 6.5 m can be aligned in the reaction zone (6), eliminating any offset.

2. Apparatus (20) according to claim 1, in which the multi-component adhesive system comprises a two-component adhesive system based on phenolic resin.

3. Apparatus (20) according to claim 1 or 2, in which the temperature of the glue before application is below room temperature.

4. Apparatus (20) according to claim 3, in which the temperature of the glue is within a range from 17 to -20°C, preferably from 15 to -8°C, more preferably from 12 to 0°C, and most preferably from 12 to 6°C.

5. Apparatus (20) according to claim 3 or 4, in which cooling of the glue is effected via an external cooling device and/or a cooling unit arranged in the glue applicator.

6. Apparatus (20) according to any of claims 3 to 5, in which behind the laminator (7) in the direction of travel are arranged a re-pressing device (8) for re-pressing the laminated substrate piece as well as a smoothing device (9, 10) for smoothing it.

7. Apparatus (20) according to claim 6, in which the laminator (7) and the re-pressing device (8) in each case comprise at least one calender with steel rollers, and wherein the smoothing device (9, 10) comprises at least one calender with elastic roll surface.

8. Apparatus (20) according to claim 7, in which the at least one calender with steel rollers of the laminator (7) has a lower temperature than the at least one calender with steel rollers of the re-pressing device (8) and/or the at least one calender with elastic roll surface of the smoothing device (9, 10).

9. Apparatus (20) according to claim 7, in which the temperature of the calender behind, in the direction of travel from the laminator (7) to the smoothing device (9, 10), is in each case gradually increased over the calender in front.

10. Apparatus (20) according to any of claims 7 to 9, in which the laminator (7) and the re-pressing device (8) in each case comprise a calender with steel rollers, and wherein the smoothing device (9, 10) comprises two calenders with elastic roll surface.

11. Apparatus (20) according to any of claims 7 to 10, in which the elastic roll surface comprises a rubber or silicone.

12. Apparatus (20) according to any of claims 8 to 11, in which the coating layer (6b) comprises a plastic material, preferably a plastic film.

13. Apparatus (20) according to any of the preceding claims, in which the length of the reaction zone (6) is designed in such a way that during alignment the whole length of the substrate piece has already left the glue applicator (5), and wherein its leading edge has not yet reached the laminator (7).

14. Apparatus (20) according to claim 13, in which the length of the reaction zone (6) is designed in such a way that in the reaction zone (6) substrate pieces having a total length of preferably up to 6.5 m can be aligned, eliminating any offset.

15. Method for laminating solid and double-walled substrate pieces with multi-component adhesive systems, comprising the following steps:
- applying a hardener to at least one surface of a substrate piece to be laminated;
- drying the hardener;
- applying a glued to the dried hardener;
- reacting the glue with the hardener; and
- laminating an approaching coating layer (6b) on the substrate piece;
**characterised in that** the time cycle of the multi-component adhesive system is delayed, and during the step of reaction of the glue with the hardener, the substrate piece is aligned with a substrate piece in front, eliminating any offset, wherein the reaction zone (6) has a longer length than the total length of the substrate piece to be laminated, so that substrate pieces of which the total length is more than 6.5 m can be aligned, eliminating any offset.

16. Method according to claim 15, wherein the multi-component adhesive system comprises a two-component adhesive system based on phenolic resin.

17. Method according to claim 15 or 16, in which before application the glue is cooled to a temperature which is below room temperature.

18. Method according to claim 17, wherein the glue is cooled to a temperature within a range from 17 to -20°C, preferably from 15 to -8°C, more preferably from 12 to 0°C, and most preferably from 12 to 6°C.

19. Method according to claim 17 or 18, furthermore, following the step of lamination, with a step of re-pressing the laminated substrate piece and a step of smoothing it.

20. Method according to claim 19, wherein the step of lamination and the step of re-pressing are in each case carried out with at least one calender with steel rollers, and the step of smoothing is carried out with at least one calender with elastic roll surface.

21. Method according to claim 20, wherein the at least one calender with steel rollers with which the step of lamination is carried out has a lower temperature than the at least one calender with steel rollers with which the step of re-pressing is carried out, and/or the at least one calender with elastic roll surface with which the step of smoothing is carried out.

22. Method according to claim 20, wherein the temperature of the calender behind, from the step of lamination to the step of smoothing, is in each case gradually increased over the calender in front.

23. Method according to any of claims 20 to 22, wherein the step of lamination and the step of re-pressing are in each case carried out with a calender with steel rollers, and wherein the step of smoothing is carried out with two calenders with elastic roll surface.

24. Method according to any of claims 21 to 23, wherein the coating layer (6b) comprises a plastic material, preferably a plastic film.

25. Method according to any of claims 15 to 24, wherein the step of applying the glue is carried out in a glue applicator (5) and the step of lamination is carried out in a laminator (7), wherein during the step of alignment the whole length of the substrate piece has already left the glue applicator (5), and wherein its leading edge has not yet reached the laminator (7).

26. Method according to claim 25, wherein substrate pieces having a total length of preferably up to 6.5 m can be aligned, eliminating any offset.

27. Method according to any of claims 15 to 26, wherein the substrate piece and the substrate piece in front butt against each other edge to edge during the steps of application of the hardener, drying of the hardener and application of the glue.

28. Method according to claim 27, wherein the substrate piece and the substrate piece in front are pulled apart during the step of alignment, wherein the substrate piece is then aligned, eliminating any offset.

## Revendications

1. Installation (20) pour le revêtement d'éléments de support massifs et creux au moyen de systèmes de colle à plusieurs composants, comprenant :
- un dispositif applicateur d'agent durcissant (3) pour l'application d'un agent durcissant sur au moins une surface d'un élément de support à revêtir ;
- un dispositif de pré-séchage (4) pour le séchage de l'agent durcissant ;
- un dispositif applicateur de colle (5) pour l'application d'une colle sur l'agent durcissant séché ;
- une zone de réaction (6) pour la réaction de la colle avec l'agent durcissant ; et
- un dispositif de revêtement (7) pour l'application d'une couche de revêtement (6b) arrivant sur l'élément de support ; **caractérisée par** un dispositif d'alignement (6a) disposé dans la zone de réaction (6) pour un alignement sans décalage de l'élément de support avec un élément de support précédent,
la zone de réaction (6) présentant une longueur supérieure à la longueur totale de l'élément de support à revêtir, et la longueur de la zone de réaction (6) étant prévue de manière à permettre l'alignement sans décalage dans la zone de réaction (6) d'éléments de support dont la longueur totale est supérieure à 6,5 m.

2. Installation (20) selon la revendication 1, où le système de colle à plusieurs composants comprend un système de colle à deux composants à base de résine phénolique.

3. Installation (20) selon la revendication 1 ou 2, où la température de la colle est inférieure à la température ambiante avant application.

4. Installation (20) selon la revendication 3, où la température de la colle est comprise dans une plage de 17 à -20 °C, avantageusement de 15 à -8 °C, préférentiellement de 12 à 0 °C, et tout particulièrement de 12 à 6 °C.

5. Installation (20) selon la revendication 3 ou 4, où le refroidissement de la colle est réalisé au moyen d'un appareil de refroidissement externe et/ou d'une unité de refroidissement disposée dans le dispositif applicateur de colle.

6. Installation (20) selon l'une des revendications 3 à 5, où un dispositif de post-pressage (8) pour le pressage consécutif ainsi qu'un dispositif de polissage (9, 10) pour le polissage de l'élément de support revêtu sont disposés en aval du dispositif de revêtement (7) dans la direction de traversée.

7. Installation (20) selon la revendication 6, où le dispositif de revêtement (7) et le dispositif de post-pressage (8) comprennent chacun au moins une calandre avec des rouleaux en acier, et où le dispositif de polissage (9, 10) comprend au moins une calandre avec une surface de rouleau élastique.

8. Installation (20) selon la revendication 7, où la ou les calandres avec des rouleaux en acier du dispositif de revêtement (7) présentent une température inférieure à celle de la ou des calandres avec des rouleaux en acier du dispositif de post-pressage (8) et/ou de la ou des calandres avec une surface de rouleau élastique du dispositif de polissage (9, 10).

9. Installation (20) selon la revendication 7, où la température de chaque calandre en aval dans la direction de traversée du dispositif de revêtement (7) au dispositif de polissage (9, 10) est graduellement élevée par rapport à la calandre qui la précède.

10. Installation (20) selon l'une des revendications 7 à 9, où le dispositif de revêtement (7) et le dispositif de post-pressage (8) comprennent chacun une calandre avec des rouleaux en acier, et où le dispositif de polissage (9, 10) comprend deux calandres avec une surface de rouleau élastique.

11. Installation (20) selon l'une des revendications 7 à 10, où la surface de rouleau élastique comprend du caoutchouc ou du silicone.

12. Installation (20) selon l'une des revendications 8 à 11, où la couche de revêtement (6b) comprend une matière synthétique, préférentiellement un film plastique.

13. Installation (20) selon l'une des revendications précédentes, où la longueur de la zone de réaction (6) est prévue de telle manière que l'élément de support a déjà quitté le dispositif applicateur de colle (5) sur toute sa longueur lors de l'alignement, et qu'il n'a pas encore atteint le dispositif de revêtement (7) par son bord avant.

14. Installation (20) selon la revendication 13, où la longueur de la zone de réaction (6) est prévue de telle manière que des éléments de support avec une longueur totale allant préférentiellement jusqu'à 6,5 m peuvent être alignés sans décalage dans la zone de réaction (6).

15. Procédé de revêtement d'éléments de support massifs et creux au moyen de systèmes de colle à plusieurs composants, comprenant les étapes suivantes :
- application d'un agent durcissant sur au moins une surface d'un élément de support à revêtir ;
- séchage de l'agent durcissant ;
- application d'une colle sur l'agent durcissant séché ;
- réaction de la colle avec l'agent durcissant ; et
- revêtement d'une couche de revêtement (6b) arrivant sur l'élément de support ;
**caractérisé en ce que** le cycle temporel du système de colle à plusieurs composants est retardé, et **en ce que**, pendant l'étape de réaction de la colle avec l'agent durcissant, l'élément de support est aligné sans décalage avec un élément de support précédent, la zone de réaction (6) présentant une longueur supérieure à la longueur totale de l'élément de support à revêtir, de manière à permettre l'alignement sans décalage d'éléments de support dont la longueur totale est supérieure à 6,5 m.

16. Procédé selon la revendication 15, où le système de colle à plusieurs composants comprend un système de colle à deux composants à base de résine phénolique.

17. Procédé selon la revendication 15 ou 16, où la colle est refroidie avant application à une température inférieure à la température ambiante.

18. Procédé selon la revendication 17, où la colle est refroidie à une température comprise dans une plage de 17 à -20 °C, avantageusement de 15 à -8 °C, préférentiellement de 12 à 0 °C, et tout particulièrement de 12 à 6 °C.

19. Procédé selon la revendication 17 ou 18, comprenant en outre, consécutivement à l'étape de revêtement, une étape de post-pressage et une étape de polissage de l'élément de support revêtu.

20. Procédé selon la revendication 19, où l'étape de revêtement et l'étape de post-pressage sont exécutées chacune avec au moins une calandre avec des rouleaux en acier, et où l'étape de polissage est exécutée avec au moins une calandre avec une surface de rouleau élastique.

21. Procédé selon la revendication 20, où la ou les calandres avec des rouleaux en acier, avec laquelle ou avec lesquelles l'étape de revêtement est exécutée, présentent une température inférieure à celle de la ou des calandres avec des rouleaux en acier avec laquelle ou avec lesquelles l'étape de post-pressage est exécutée, et/ou de la ou des calandres avec une surface de rouleau élastique avec laquelle ou avec lesquelles l'étape de polissage est exécutée.

22. Procédé selon la revendication 20, où la température de chaque calandre en aval de l'étape de revêtement à l'étape de polissage est graduellement élevée par rapport à la calandre qui la précède.

23. Procédé selon l'une des revendications 20 à 22, où l'étape de revêtement et l'étape de post-pressage sont exécutées chacune avec une calandre avec des rouleaux en acier, et où l'étape de polissage est exécutée avec deux calandres avec une surface de rouleau élastique.

24. Procédé selon l'une des revendications 21 à 23, où la couche de revêtement (6b) comprend une matière synthétique, préférentiellement un film plastique.

25. Procédé selon l'une des revendications 15 à 24, où l'étape d'application de la colle est exécutée dans un dispositif applicateur de colle (5) et l'étape de revêtement dans un dispositif de revêtement (7), l'élément de support ayant déjà quitté le dispositif applicateur de colle (5) sur toute sa longueur lors de l'étape d'alignement, et n'ayant pas encore atteint le dispositif de revêtement (7) par son bord avant.

26. Procédé selon la revendication 25, où des éléments de support avec une longueur totale allant préférentiellement jusqu'à 6,5 m peuvent être alignés sans décalage.

27. Procédé selon l'une des revendications 15 à 26, où l'élément de support et l'élément de support précédent sont disposés bout-à-bout lors des étapes d'application de l'agent durcissant, de séchage de l'agent durcissant et d'application de la colle.

28. Procédé selon la revendication 27, où l'élément de support et l'élément de support précédent sont écartés l'un de l'autre lors de l'étape d'alignement, l'élément de support étant alors aligné sans décalage.
